# EUROPÄISCHE PATENTANMELDUNG

(11) **EP 2 657 650 A1**
(43) Veröffentlichungstag der Anmeldung: **30.10.2013**
(21) Anmeldenummer: 12165539.3
(22) Anmeldetag: 25.04.2012
(51) Int. Cl.: G01D 5/12

(54) **Messwertgeber zum Erhalt einer Positionsinformation und Verfahren zum Betrieb eines Messwertgebers**

(71) Anmelder: Siemens Aktiengesellschaft, 80333 München (DE)
(72) Erfinder: Singer, Marc, 91301 Forchheim (DE); Moniac, Sven, 91056 Erlangen (DE)

(57) **Zusammenfassung**

Die Erfindung betrifft einen Messwertgeber (20) zum Erhalt einer Positionsinformation und ein Verfahren zum Betrieb eines Messwertgebers (20), wobei mit einer auf einem kapazitiven Wirkprinzip beruhenden Sensorik (12) eine Maßverkörperung abtastbar ist, wobei die Maßverkörperung auf einem Träger (16) aufgebracht ist und geeignet ist, ein insbesondere von der Sensorik (12) erzeugtes elektrisches Feld zu beeinflussen und wobei die Maßverkörperung auf dem Träger (16) aufgedruckt oder auf dem Träger aufgeprägt ist.

## Beschreibung

Die Erfindung betrifft einen Messwertgeber zum Erhalt einer Positionsinformation. Solche Messwertgeber sind an sich bekannt. Exemplarisch kann auf sogenannte Inkrementalgeber verwiesen werden. Die Erfindung betrifft im Weiteren auch ein Verfahren zum Betrieb eines Messwertgebers.

Der hier zu beschreibende Messwertgeber basiert auf einer kapazitiven Abtastung einer Maßverkörperung. Eine solche Abtastung einer jeweiligen Maßverkörperung ist zum Beispiel bei Inkrementalgebern ebenfalls bekannt, indem dort ein induktiver oder optischer Sensor verwendet wird und im Erfassungsbereich des jeweiligen Sensors ein Träger mit einer von dem Sensor erfassbaren Maßverkörperung bewegt wird.

Eine Aufgabe der Erfindung besteht darin, eine weitere Ausführungsform eines Messwertgebers zum Erhalt einer Positionsinformation sowie ein Verfahren zum Betrieb eines solchen Messwertgebers anzugeben.

Diese Aufgabe wird erfindungsgemäß mit einem Messwertgeber mit den Merkmalen des Anspruchs 1 gelöst. Dazu ist bei einem Messwertgeber, der mit einer auf einem kapazitiven Wirkprinzip beruhenden Sensorik eine Maßverkörperung abtastet, wobei die Maßverkörperung auf einem Träger aufgebracht ist und geeignet ist, ein insbesondere von der Sensorik erzeugtes elektrisches Feld zu beeinflussen, vorgesehen, dass die Maßverkörperung auf dem Träger aufgedruckt oder auf dem Träger aufgeprägt ist.

Die Erfindung geht dabei von der Erkenntnis aus, dass die jüngst speziell von dem Unternehmen Printechnologics GmbH unter der Bezeichnung "touchcode" vorgestellte Technologie, mit der gedruckte Informationen mit der von sogenannten Smartphones umfassten Sensorik erfassbar sind, wie dies zum Beispiel in der WO 2011/154524 A beschrieben ist, auch zur Erfassung von Positionsinformationen verwendbar ist.

Als Sensorik, insbesondere als Flächensensor, kommt dabei eine Vorrichtung in Betracht, die nach dem Prinzip der sogenannten Projected-Capacitive-Touch-Technik (PCT) arbeitet. Varianten der PCT-Technik sind unter den Stichworten "Mutual Capacitance" und "Self Capacitance" bekannt. Auf Basis dieser Technologien realisierte Anzeigevorrichtungen sind als Mutual-Capacitance-Screen oder Self-Capacitance-Screen bekannt. Bei Smartphones oder dergleichen wird eine solche oder ähnliche Sensorik stets im Zusammenhang mit einer Anzeigevorrichtung verwendet, nämlich zum Beispiel einer TFT-Schicht, die sich unterhalb der Sensorik befindet, so dass für den Benutzer des Smartphones der Eindruck entsteht, mittels der Anzeigevorrichtung dargestellte Bildelemente zu betätigen oder zu bewegen.

Bei dem hier vorgestellten Messwertgeber ist eine solche Anzeigevorrichtung oder eine als Anzeigevorrichtung fungierende Schicht nicht erforderlich und es ist ausreichend, wenn der Messwertgeber als Sensorik einen auf einem kapazitiven Wirkprinzip basierenden Sensor, insbesondere einen als Flächensensor ausgeführten Sensor, aufweist.

Ein solcher Sensor kann eine auf einen Träger aufgedruckte oder auf den Träger aufgeprägte Maßverkörperung erkennen und auf dieser Basis Positionsinformationen generieren.

Auf einem kapazitiven Wirkprinzip basierende Sensoren sind bisher im Wesentlichen als Feuchtigkeitssensor, als Drucksensor oder als Beschleunigungssensor verwendet worden. Wenn kapazitive Sensoren zum Erhalt einer Positionsinformation verwendet wurden, wurde ein Abstand zweier Elektroden und ein daraus jeweils resultierendes elektrisches Feld zum Erhalt einer positionsproportionalen Analoginformation ausgewertet. Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn als Sensorik ein Flächensensor fungiert, nämlich zum Beispiel ein Flächensensor, wie er von den eingangs genannten Smartphones oder ähnlichen Geräten bekannt ist, ist auch die Erfassung einer flächigen Maßverkörperung möglich.

Wenn der als Sensorik fungierende Flächensensor die gesamte Oberfläche des jeweiligen Trägers erfasst, ist die gleichzeitige Auswertung unterschiedlicher Abschnitte der Maßverkörperung möglich. Jederzeit ist damit eine Lage des Trägers erkennbar, also zum Beispiel eine Rotationslage und damit auch eine Rotationslage zum Beispiel eines Motors oder einer Motorachse, mit dem bzw. mit der der Träger gekoppelt ist. Des Weiteren ist eine Geschwindigkeit des Trägers und damit eine Geschwindigkeit zum Beispiel eines Motors, mit dessen Achse der Träger bewegt wird, auf diese Weise in nahezu jedem Augenblick erfassbar, wohingegen bisher dafür stets eine Erfassung von zumindest zwei aufeinander folgenden Abschnitten innerhalb der Maßverkörperung erforderlich war.

Bei einer Ausführungsform des Messwertgebers ist vorgesehen, dass auf dessen Träger eine Maßverkörperung in Form räumlich unterscheidbarer Abschnitte aufgedruckt oder aufgeprägt ist und dass die Maßverkörperung eine Mehrzahl derartiger Maßverkörperungselemente mit jeweils einem jedem Maßverkörperungselement zugeordneten Informationsinhalt aufweist. Der Messwertgeber wird dabei als System aufgefasst, welches auch den Träger umfasst. Der Ausdruck Messwertgeber, wie hier und im Folgenden verwendet, meint damit also den Messwertgeber in Verbindung mit dem jeweils abgetasteten Träger. Wenn der Träger eine Maßverkörperung mit unterscheidbaren Maßverkörperungselementen aufweist und jedes Maßverkörperungselement eine Information kodiert, kann die Auswertung der jeweils kodierten Information für den Betrieb des Messwertgebers, aber auch für den Betrieb eines übergeordneten Systems, zum Beispiel für den Betrieb eines Elektromotors, dem der Messwertgeber zugeordnet ist, verwendet werden. Die in einem Maßverkörperungselement kodierte Information kann zum Beispiel das Zurücksetzen einzelner oder mehrerer Zähler bewirken, die von einer Steuerungselektronik des Messwertgebers beim Abtasten der Maßverkörperung verwendet werden.

Bei einer besonderen Ausführungsform eines Messwertgebers, bei dem jedes Maßverkörperungselement eine Information kodiert, ist vorgesehen, dass die Maßverkörperung als Absolutspur für den Messwertgeber fungiert. Der Messwertgeber arbeitet dann zum Beispiel als Drehgeber, wenn der Träger rotatorisch beweglich ist, oder als Lineargeber, wenn für den Träger eine translatorische Beweglichkeit vorgesehen ist.

Eine besonders einfache Möglichkeit zur Auswertung einer als Absolutspur fungierenden Maßverkörperung ist dann gegeben, wenn jedes Maßverkörperungselement der Absolutspur einen Wert einer mit der Position des jeweiligen Maßverkörperungselements auf dem Träger korrelierten absoluten Position kodiert. Dann braucht lediglich die mit dem jeweiligen Maßverkörperungselement assoziierte Information ausgelesen werden, indem dafür das Maßverkörperungselement entsprechend der jeweils verwendeten Kodierung ausgewertet wird. Die ausgelesene Information gibt dabei ähnlich wie eine Beschriftung auf einem Lineal unmittelbar einen absoluten Positionswert an. Der Positionswert ist dabei unmittelbar als von dem Messwertgeber ausgebbare Positionsinformation verwendbar. Für die Maßverkörperungselemente kommen unterschiedlichste Kodierverfahren in Betracht. So kann die jeweilige Information zum Beispiel in unterschiedlichen binären Codes dargestellt werden. Daneben kann das Maßverkörperungselement auch redundante Informationen umfassen, die zum Beispiel eine Fehlerkorrektur beim Auslesen und Auswerten des jeweiligen Maßverkörperungselements erlauben.

Alternativ oder zusätzlich zu einer als Absolutspur fungierenden Maßverkörperung kommt auch eine Maßverkörperung in Betracht, die für den Messwertgeber als Inkrementalspur fungiert. Bei einer besonderen Ausführungsform ist vorgesehen, dass die Maßverkörperung eine Absolutspur und eine Inkrementalspur umfasst. Eine Maßverkörperung mit einer Absolutspur und einer Inkrementalspur kann sich dabei auch ergeben, wenn innerhalb ein und derselben Spur Maßverkörperungselemente mit Absolut- und Inkrementalinformationen vorgesehen sind, zum Beispiel in einer alternierenden Abfolge. Genauso kann vorgesehen sein, dass jedes Maßverkörperungselement oder zumindest einzelne Maßverkörperungselemente sowohl Absolutinformationen wie auch Inkrementalinformationen kodieren.

Bei einer weiteren Ausführungsform des Messwertgebers, der dann als Drehgeber fungiert, kodieren einzelne Maßverkörperungselemente eine mit der Position des jeweiligen Maßverkörperungselements auf dem Träger korrelierte radiale Position. Dann sind auch eine eventuelle Fehljustierung der Sensorik in Bezug auf die Maßverkörperung oder eine eventuelle Exzentrizität der Maßverkörperung oder des Trägers erkennbar.

Insgesamt betrifft der hier vorgestellte Ansatz auch die Verwendung eines auf einen Träger aufgedruckten oder aufgeprägten Codes als Maßverkörperung zur kapazitiven Erfassung durch einen Messwertgeber mit einer auf einem kapazitiven Wirkprinzip beruhenden Sensorik.

Die eingangs genannte Aufgabe wird auch mit einem Verfahren zum Betrieb eines Messwertgebers wie hier und nachfolgend beschrieben gelöst, indem mit der auf dem kapazitiven Wirkprinzip beruhenden Sensorik des Messwertgebers beim Betrieb des Messwertgebers die auf den Träger aufgedruckte oder aufgeprägte Maßverkörperung erfasst und ausgewertet wird. Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung auch Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen:
- FIG 1: einen Sensor mit einer auf einem kapazitiven Wirkprinzip beruhenden Sensorik und einen damit erfassbaren Code,
- FIG 2: einen mit einem Sensor gemäß FIG 1 realisierten Messwertgeber mit einem drehbaren Träger,
- FIG 3: einen Messwertgeber gemäß FIG 2 mit einem den kompletten Träger erfassenden Sensor und
- FIG 4: einen Messwertgeber mit einem linear bewegten Träger.

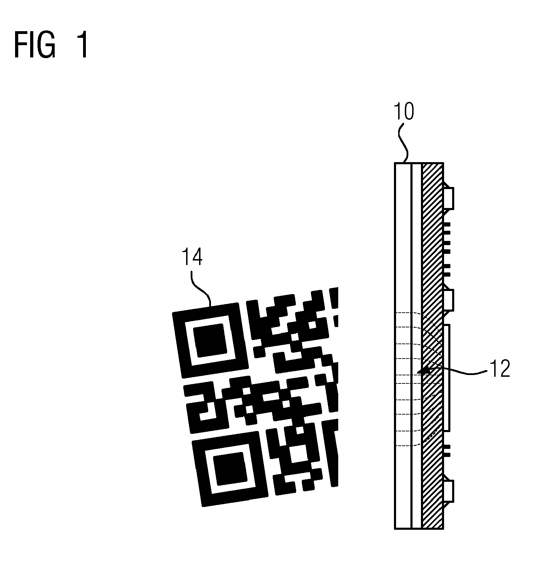

FIG 1 zeigt in einer Seitenansicht einen Sensor 10 mit einer auf einem kapazitiven Wirkprinzip beruhenden Sensorik 12. Die Sensorik 12 arbeitet zum Beispiel nach dem Prinzip der sogenannten Projected-Capacitive-Touch-Technik (PCT). Der Sensor 10 umfasst die Sensorik 12 in einer flächigen Anordnung, so dass ein gedruckter oder geprägter Code 14 erfasst und ausgewertet werden kann. Die Erfassung und Auswertbarkeit des Codes 14 erfordert dabei, dass der Code 14 eine Veränderung eines elektrischen Feldes bewirkt und dass solche Veränderungen eines elektrischen Feldes von der Sensorik 12 erfassbar sind. Das elektrische Feld kann dabei von der Sensorik 12 selbst erzeugt werden. Eine Änderung eines elektrischen Feldes zwischen zwei Elektroden ergibt sich bekanntlich immer dann, wenn ein zwischen den Elektroden wirksames Dielektrikum eine Änderung erfährt. Die jeweilige Druckfarbe, mit der ein Code 14 aufgedruckt wird, also zum Beispiel eine Tinte, ist grundsätzlich geeignet, eine sogenannte Dielektrizitätszahl eines Materials, auf das die Druckfarbe aufgebracht wird, zu beeinflussen. Ein bedrucktes Material weist demnach in den mit Druckfarbe belegten Bereichen eine im Vergleich zu nicht bedruckten Bereichen lokal unterschiedliche Dielektrizitätszahl auf. Solche Unterschiede können mit einer entsprechenden Sensorik 12 erfasst werden. Gleiches gilt grundsätzlich für einen aufgeprägten Code 14.

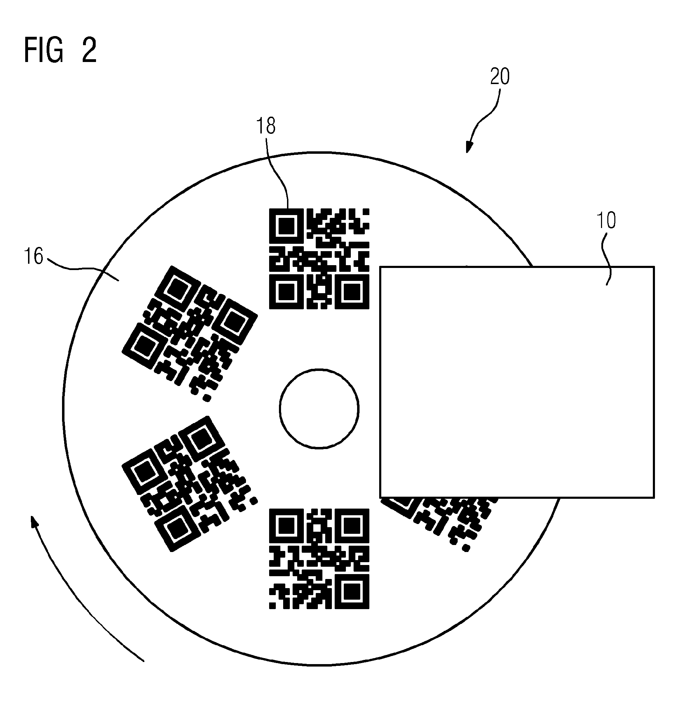

FIG 2 zeigt dazu ein Anwendungsbeispiel. Auf einen rotierenden Träger 16 ist eine Mehrzahl von Maßverkörperungselementen 18 aufgebracht, also insbesondere aufgedruckt oder aufgeprägt. Jedes Maßverkörperungselement 18 kodiert dabei eine Information, nämlich zum Beispiel eine mit der Position des jeweiligen Maßverkörperungselements 18 auf dem Träger 16 korrelierte absolute Position, so dass ein Maßverkörperungselement 18 ein Beispiel für den in FIG 1 gezeigten Code 14 darstellt. Der Code 14, nämlich das Maßverkörperungselement 18, wird mit einem Sensor 10 abgetastet und ausgewertet. Der Code 14 oder das Maßverkörperungselement 18 wirken demnach als Aktor auf den Sensor 10. Hier und im Folgenden ist als Code / Maßverkörperungselement 14, 18 stets ein sogenannter 2D-Code oder QR-Code gezeigt. Andere Darstellungen eines zweidimensionalen Codes, zum Beispiel ein DataMatrix-Code oder dergleichen, kommen genauso in Betracht. Umgekehrt ist das hier vorgestellte Prinzip nicht auf die Verwendung zweidimensionaler Codes beschränkt, denn Positionsinformationen in Form einer Absolut-, Inkremental- oder Radialinformation können zum Beispiel auch durch einen Barcode dargestellt werden und damit in einem eindimensionalen Code kodiert sein.

Das in FIG 2 dargestellte Anwendungsbeispiel ist eine schematisch vereinfachte Darstellung einer Abtastung einer durch die Gesamtheit der Maßverkörperungselemente 18 gebildeten Maßverkörperung mit einem Sensor 10 mit einer auf einem kapazitiven Wirkprinzip beruhenden Sensorik 12 (FIG 1). Die Vorrichtung in FIG 2 fungiert damit als Messwertgeber 20 und umfasst einerseits den Sensor 10 und andererseits den Träger 16 mit der auf diesen aufgedruckten oder aufgeprägten Maßverkörperung.

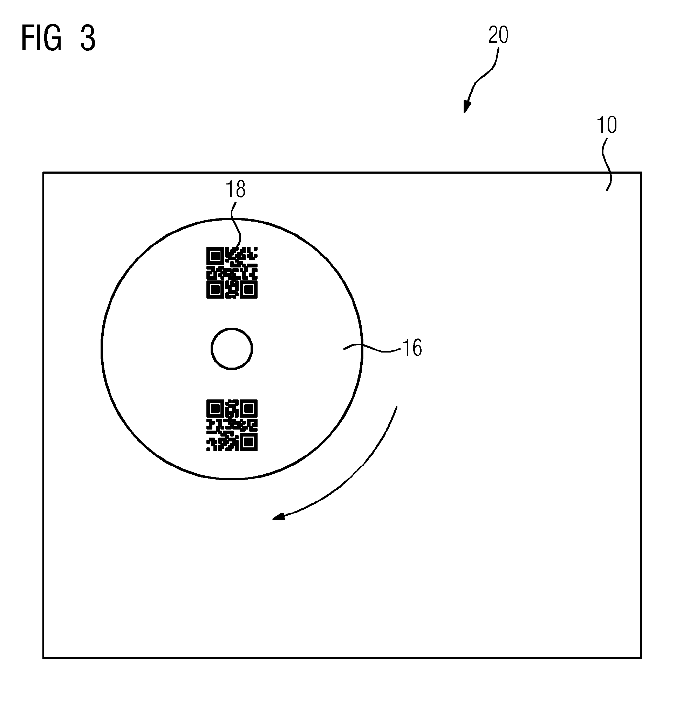

FIG 3 zeigt eine alternative Ausführungsform des Messwertgebers 20. Der als Flächensensor ausgeführte Sensor 10 ist hier so groß, dass er den Träger 16 in seiner Gesamtheit und damit gleichzeitig alle auf dem Träger 16 aufgebrachten Maßverkörperungselemente 18 erfasst. Ein Sensor 10 mit solchen Ausmaßen erlaubt die Verwendung der von den bereits genannten, sogenannten Smartphones bekannten Multitouch-Technik auch bei einem Messwertgeber 20. Multitouch bedeutet kurz gefasst, dass mehrere Berührungen einer dafür sensitiven Oberfläche gleichzeitig erkannt werden, so dass zum Beispiel das bei Smartphones bekannte Vergrößern von Bildausschnitten möglich ist. Bei Smartphones wird dabei das Spreizen zweier Finger erkannt und der Benutzer erhält den Eindruck, als würde er das vergrößerte Bild gleichsam aufziehen. Wenn bei einem Smartphone die gleichzeitige Bewegung zweier Fingerkuppen auf der dafür sensitiven Oberfläche des Geräts erkennbar ist, entspricht dies nach dem hier vorgestellten Ansatz bei einem Messwertgeber 20 der gleichzeitigen Erfassung einer Bewegung von zwei oder mehr Maßverkörperungselementen 18. Durch eine gleichzeitige Erfassung und Auswertung von zwei oder mehr Maßverkörperungselementen 18 kann zum Beispiel eine Geschwindigkeit oder eine Beschleunigung des jeweiligen Trägers 16 und damit auch eine Geschwindigkeit oder Beschleunigung eines Motors (nicht dargestellt), mit dem der Träger 16 gekoppelt ist, ermittelt werden.

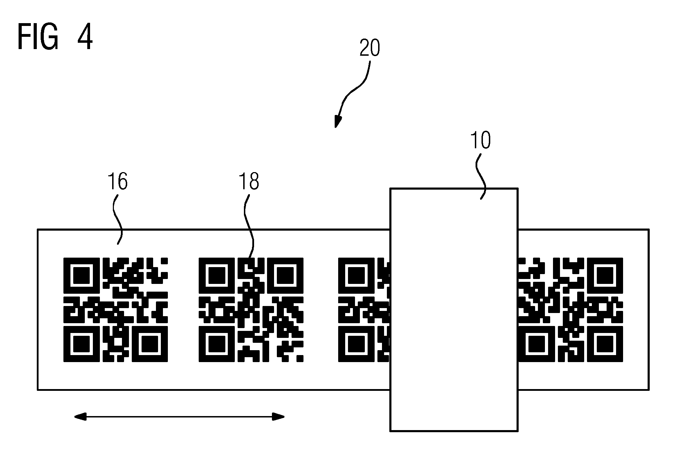

FIG 4 ist abschließend eine Darstellung eines im Unterschied zu der in FIG 2 und FIG 3 gezeigten Situation linear (translatorisch) bewegten Trägers 16, so dass der dort gezeigte Messwertgeber 20 als Lineargeber fungiert. Genauso wie dies in FIG 3 für den rotierenden Träger 16 gezeigt ist, kann auch bei einem als Lineargeber fungierenden Messwertgeber 20 dessen Sensor 10 so groß ausgeführt sein, dass eine gleichzeitige Erfassung mehrerer Maßverkörperungselemente 18, zumindest zu jedem Zeitpunkt die vollständige Erfassung genau eines Maßverkörperungselements 18, möglich ist. Speziell wenn zu jedem Zeitpunkt die vollständige Erfassung genau eines Maßverkörperungselements 18 gewährleistet ist, lässt sich daraus eine vollständige Lageinformation hinsichtlich der Position des Trägers 16 und damit auch einer den Träger bewegenden Einheit (Motor, Motorachse, Getriebeachse, usw.) ableiten. Die Erfassung des jeweiligen Maßverkörperungselements 18 mit der Fläche des Sensors 10 gibt bereits eine Grobinformation hinsichtlich der jeweiligen Lage des Trägers 16. Eine Feininformation kommt hinzu, indem die Position des erfassten Maßverkörperungselements 18 in Bezug auf die Fläche des Sensors 10 ausgewertet wird. Zur Erfassung flächiger Codes 14 umfasst der Sensor 10 in Form von dessen Sensorik 12 einzelne, kapazitiv sensitive Elemente, die in einer matrixartigen Struktur angeordnet sind. Die Erfassung des Maßverkörperungselements 18 resultiert demnach in einer Vielzahl von dem Sensor 10 gelieferter Signale, wobei jedem Signal zumindest implizit eine Positionsinformation gemäß der Position des ursächlichen Elements in der Matrix zugeordnet ist. Damit kann als Feininformation die relative Position des Maßverkörperungselements 18 in Bezug auf den Sensor 10 ermittelt werden.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

## Patentansprüche

1. Messwertgeber (20) mit einer auf einem kapazitiven Wirkprinzip beruhenden Sensorik (12), mit dem eine Maßverkörperung abtastbar ist, wobei die Maßverkörperung auf einem Träger (16) aufgebracht ist und geeignet ist, ein insbesondere von der Sensorik (12) erzeugtes elektrisches Feld zu beeinflussen,
**dadurch gekennzeichnet, dass** die Maßverkörperung auf dem Träger (16) aufgedruckt oder auf dem Träger (16) aufgeprägt ist.

2. Messwertgeber (20) nach Anspruch 1, wobei als Sensorik (12) ein Flächensensor (10) fungiert.

3. Messwertgeber (20) nach Anspruch 2, wobei der als Sensorik (12) fungierende Flächensensor (10) die gesamte Oberfläche des Trägers (16) erfasst.

4. Messwertgeber (20) nach Anspruch 1, 2 oder 3, wobei auf dessen Träger (16) eine Maßverkörperung in Form räumlich unterscheidbarer Abschnitte aufgedruckt oder aufgeprägt ist und wobei die Maßverkörperung eine Mehrzahl von Maßverkörperungselementen (18) mit jeweils einem jedem Maßverkörperungselement (18) zugeordneten Informationsinhalt aufweist.

5. Messwertgeber (20) nach Anspruch 4, wobei die Maßverkörperung als Absolutspur fungiert.

6. Messwertgeber (20) nach Anspruch 5, wobei jedes Maßverkörperungselement (18) der Absolutspur einen Wert einer mit der Position des jeweiligen Maßverkörperungselements (18) auf dem Träger (16) korrelierten absoluten Position kodiert.

7. Messwertgeber (20) nach einem der Ansprüche 4 bis 6, wobei die Maßverkörperung als Inkrementalspur fungiert.

8. Messwertgeber (20) nach einem der Ansprüche 4 bis 6, wobei die einzelnen Maßverkörperungselemente (18) bei einem als Drehgeber fungierenden Messwertgeber (20) eine mit der Position des jeweiligen Maßverkörperungselements (18) auf dem Träger korrelierte radiale Position kodiert.

9. Verwendung eines auf einen Träger (16) aufgedruckten oder aufgeprägten Codes (14) als Maßverkörperung zur kapazitiven Erfassung durch einen Messwertgeber (20) mit einer auf einem kapazitiven Wirkprinzip beruhenden Sensorik (12).

10. Verfahren zum Betrieb eines Messwertgebers (20) nach einem der Ansprüche 1 bis 8, wobei mit der auf dem kapazitiven Wirkprinzip beruhenden Sensorik (12) des Messwertgebers (20) bei dessen Betrieb die auf den Träger (16) aufgedruckte oder aufgeprägte Maßverkörperung erfasst und ausgewertet wird.
